# FASCICULE DE BREVET EUROPEEN

(11) **EP 3 938 632 B1**
(45) Date de publication et mention de la délivrance du brevet: **11.06.2025**
(21) Numéro de dépôt: 20726183.5
(22) Date de dépôt: 12.03.2020
(51) Int. Cl.: F01P 3/18, F01P 5/06, F01P 11/10, B60K 11/04, B60L 58/26, F04D 17/04, B60K 1/00, B60L 1/00, B60L 1/02, B60L 3/00, F04D 29/42

(54) **MODULE DE REFROIDISSEMENT POUR VÉHICULE AUTOMOBILE ÉLECTRIQUE À TURBOMACHINE TANGENTIELLE**
KÜHLMODUL FÜR EIN ELEKTROFAHRZEUG MIT EINER STRÖMUNGSMASCHINE
COOLING MODULE FOR AN ELECTRIC MOTOR VEHICLE, COMPRISING A TANGENTIAL-FLOW TURBOMACHINE

(30) Priorité: 15.03.2019 FR 1902676
(43) Date de publication de la demande: 19.01.2022
(73) Titulaire: VALEO SYSTEMES THERMIQUES, 78320 Le Mesnil Saint-Denis (FR)
(72) Inventeur: AZZOUZ, Kamel, 78322 LE MESNIL SAINT DENIS CEDEX (FR); MAMMERI, Amrid, 78322 LE MESNIL SAINT DENIS CEDEX (FR)
(74) Mandataire: Valeo Systèmes Thermiques
(86) Numéro de dépôt international: PCT/FR2020/050513
(87) Numéro de publication internationale: WO 2020/188192

(56) Documents cités:
- EP-A1- 0 098 397
- EP-A1- 0 098 397
- EP-A1- 1 715 157
- EP-A1- 1 715 157
- DE-A1- 10 019 237
- DE-A1- 10 019 237
- GB-A- 2 070 688
- GB-A- 2 070 688
- US-A1- 2005 023 057
- US-A1- 2005 023 057

## Description

### Domaine technique

L'invention se rapporte à un module de refroidissement pour véhicule automobile électrique, à turbomachine tangentielle. L'invention vise également un véhicule automobile électrique muni d'un tel module de refroidissement.

### Technique antérieure

Un module de refroidissement (ou module d'échange de chaleur) d'un véhicule automobile comporte classiquement au moins un échangeur thermique et un dispositif de ventilation adapté à générer un flux d'air au contact du au moins un échangeur thermique. Le dispositif de ventilation permet ainsi, par exemple, de générer un flux d'air au contact de l'échangeur thermique, à l'arrêt du véhicule.

Dans les véhicules automobiles à moteur thermique classiques, le au moins un échangeur thermique est de forme sensiblement carrée, le dispositif de ventilation étant alors un ventilateur à hélice dont le diamètre est sensiblement égal au côté du carré formé par l'échangeur thermique.

Classiquement, l'échangeur thermique est alors placé en regard d'au moins deux baies de refroidissement, formées dans la face avant de la carrosserie du véhicule automobile. Une première baie de refroidissement est située au-dessus du pare-chocs tandis qu'une deuxième baie est située au-dessous du pare-chocs. Une telle configuration est préférée car le moteur thermique doit également être alimenté en air, l'admission d'air du moteur étant classiquement situé dans le passage du flux d'air traversant la baie de refroidissement supérieure.

Cependant, les véhicules électriques sont de préférence munis uniquement de baies de refroidissement situées sous le pare-chocs, de préférence encore d'une unique baie de refroidissement située sous le pare-chocs.

En effet, le moteur électrique n'a pas besoin d'être alimentée en air. Et la diminution du nombre de baies de refroidissement permet d'améliorer les caractéristiques aérodynamiques du véhicule électrique. Ceci se traduit également par une meilleure autonomie et une plus grande vitesse de pointe du véhicule automobile.

Dans ces conditions, la mise en œuvre d'un module de refroidissement classique apparait peu satisfaisante. En effet, une grande partie des échangeurs thermiques ne sont plus correctement refroidis par le flux d'air provenant uniquement de la ou des baies de refroidissement inférieure/s.

Un but de l'invention est de proposer un module de refroidissement pour véhicule automobile électrique ne présentant pas au moins certains des inconvénients susmentionnés.

Le document EP1715157A1 divulgue un module de refroidissement selon le préambule de la revendication 1.

### Exposé de l'invention

À cet effet, l'invention a pour objet un module de refroidissement pour véhicule automobile à moteur électrique selon la revendication 1.

Ainsi, avantageusement, le ou les échangeurs thermiques présente/nt des dimensions adaptées pour n'être refroidi/s qu'au moyen d'une ou plusieurs baies de refroidissement inférieures. En outre, la turbomachine tangentielle permet de créer un flux d'air à travers tous les échangeurs thermiques avec un bien meilleur rendement que si un ventilateur à hélice était mis en œuvre.

De préférence, le module de refroidissement comporte une ou plusieurs des caractéristiques suivantes, prises seules ou en combinaison :
- la partie de structure et la partie d'isolation acoustique sont constituées de matériaux différents,
- la partie de structure est constituée d'un matériau rigide tandis que la partie d'isolation acoustique est constituée d'un matériau de type mousse acoustique,
- le matériau rigide est un polymère PP ou PA6,
- le carénage loge ladite pluralité d'échangeurs thermiques et au moins une première turbomachine tangentielle.

Selon un autre aspect, il est proposé un véhicule automobile à moteur électrique, comprenant une carrosserie, un pare-chocs et un module de refroidissement tel que décrit précédemment, la carrosserie définissant au moins une baie de refroidissement disposée sous le pare-chocs, le module de refroidissement étant disposé en regard de la au moins une baie de refroidissement.

### Brève description des dessins

D'autres caractéristiques, détails et avantages de l'invention apparaîtront à la lecture de la description détaillée ci-après, et à l'analyse des dessins annexés, sur lesquels :
[Fig. 1] représente schématiquement la partie avant d'un véhicule automobile à moteur électrique, vu de côté ;
[Fig. 2] est une vue schématique en perspective d'un module de refroidissement pouvant être mis en œuvre dans le véhicule automobile de la figure 1;
[Fig. 3] est une vue analogue à la figure 2, du même module de refroidissement dont une partie du boîtier a été retirée ;
[Fig. 4] est une vue arrachée selon le plan IV-IV du module de refroidissement de la figure 2;
[Fig. 5] est une vue schématique d'un détail du module de refroidissement de la figure 2 ;
[Fig. 6] est une vue en perspective du module de refroidissement de la figure 2, selon une orientation opposée ;
[Fig. 7a] illustre schématiquement une première variante de module de refroidissement ;
[Fig. 7b] illustre schématiquement une deuxième variante de module de refroidissement ;
[Fig. 7c] illustre schématiquement une troisième variante de module de refroidissement ; et
[Fig. 8] illustre schématiquement une quatrième variante de module de refroidissement.
[Fig. 9] illustre schématiquement un module de refroidissement selon un l'invention.

### Description de modes de réalisation

Dans la suite de la description, les éléments identiques ou de fonction identique portent le même signe de référence. À fin de concision de la présente description, ces éléments ne sont pas décrits en détails dans chaque mode de réalisation. Au contraire, seules les différences entre les variantes de réalisation sont décrites en détails.

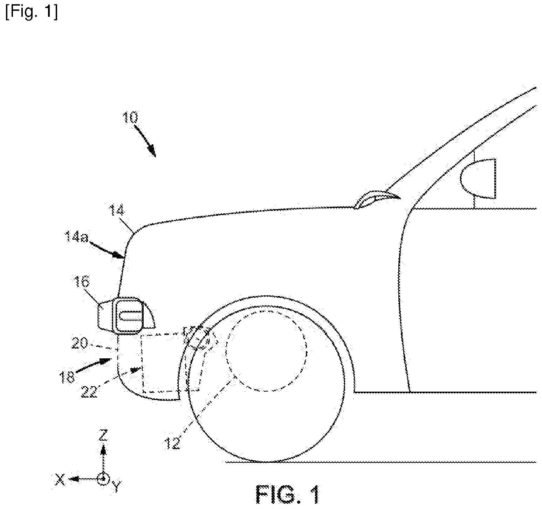

La figure 1 illustre de manière schématique la partie avant d'un véhicule automobile 10 à moteur électrique 12. Le véhicule 10 comporte notamment une carrosserie 14 et un pare-chocs 16 portés par un châssis (non représenté) du véhicule automobile 10. La carrosserie 14 définit une baie de refroidissement 18, c'est-à-dire une ouverture à travers la carrosserie 14. La baie de refroidissement 18 est ici unique. Cette baie de refroidissement 18 se trouve en partie basse de la face avant 14a de la carrosserie 14. Dans l'exemple illustré, la baie de refroidissement 18 est située sous le pare-chocs 16. Une grille 20 peut être disposée dans la baie de refroidissement 18 pour éviter que des projectiles puissent traverser la baie de refroidissement 18. Un module de refroidissement 22 est disposé en vis-à-vis de la baie de refroidissement 18. La grille 20 permet notamment de protéger ce module de refroidissement 22.

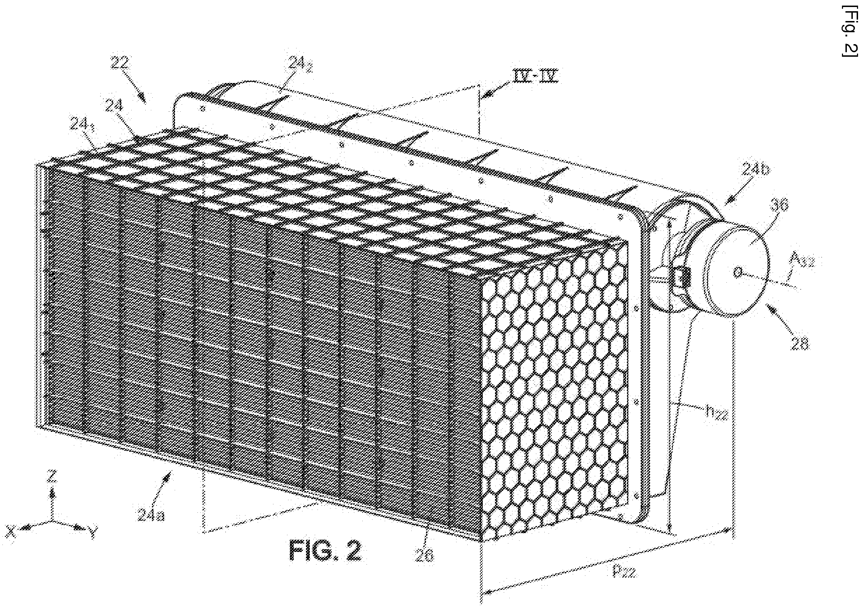

Le module de refroidissement 22 est plus nettement visible sur la figure 2.

Tel qu'illustré sur cette figure 2, le module de refroidissement 22 comporte essentiellement un boîtier ou carénage 24 formant un canal interne entre deux extrémités 24a, 24b opposées. Le carénage 24 permet de loger la pluralité des échangeurs de chaleurs et/ou au moins une turbomachine tangentielle. L'extrémité 24a est destinée à être disposée en regard de la baie de refroidissement 18. L'ouverture du boîtier 24 au niveau de cette extrémité avant 24a du canal peut être partiellement obturée au moyen d'un grillage 26.

Le boîtier 24 est ici réalisé en deux parties 24₁, 24₂ qui sont fixées ensemble par tout moyen accessible à l'homme de l'art. En l'espèce, les deux parties 24₁, 24₂ sont vissées ensemble au niveau d'une collerette. La partie avant 24₁ a essentiellement une forme de parallélépipède rectangle ouvert sur deux faces opposées. La partie arrière 24₂ a une forme sensiblement plus complexe. Cette partie arrière 24₂ forme notamment ici la volute d'une turbomachine tangentielle 28.

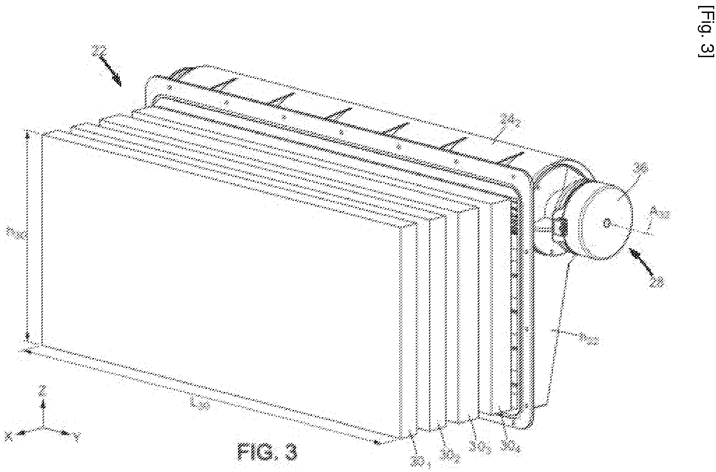

La figure 3 illustre le dispositif de refroidissement 22 dont la partie avant 24₁ du boîtier 24 a été retirée. La figure 3 illustre ainsi la présence d'une pluralité d'échangeurs thermiques 30₁-30₄ dans le conduit formé à l'intérieur du boîtier 24. Ici, quatre échangeurs thermiques 30₁-30₄ sont prévus. Bien entendu, ce nombre d'échangeurs thermiques n'est pas limitatif. Au contraire, un nombre différent d'échangeurs thermiques peut être prévu dans le boîtier, notamment au moins un échangeur thermique, de préférence entre quatre et sept échangeurs thermiques, de manière encore plus préférée quatre ou cinq échangeurs thermiques. Les échangeurs thermiques 30₁-30₄ sont illustrés sur la figure 3 de manière schématique, sous la forme de plaques sensiblement rectangulaires. En pratique, et de manière remarquable, les échangeurs thermiques 30₁-30₄ présentent notamment une hauteur h₃₀, mesurée selon une direction sensiblement verticale, inférieure ou égale à 350 mm. Les échangeurs thermiques 30₁-30₄ sont ainsi particulièrement bien dimensionnés pour être en contact avec un flux d'air provenant de la baie de refroidissement 18.

Dans l'exemple illustré sur la figure 3, tous les échangeurs thermiques 30₁-30₄ sont identiques et présentent tous une même hauteur h₃₀. Dans le cas où les échangeurs thermiques 30₁-30₄ ont des hauteurs différentes, il est préféré que toutes ces hauteurs soient inférieures ou égale à 350 mm.

De préférence, la hauteur h₃₀ des échangeurs thermiques 30₁-30₄ est comprise entre 70 mm et 300 mm. Ceci permet en effet d'assurer des performances satisfaisantes des échangeurs thermiques 30₁-30₄ tout en conservant un encombrement réduit de ces échangeurs thermiques, encombrement particulièrement adapté à la mise en œuvre d'une seule baie de refroidissement 18. Là encore, dans le cas où les échangeurs thermiques 301-304 ont des hauteurs différentes, il est préféré que la hauteur de chaque échangeur thermique 301-304 soit comprise entre 70 mm et 300 mm.

De manière encore plus préférée, le module de refroidissement 22 présente une hauteur h₂₂ comprise entre 70 mm et 300 mm. On comprend que la hauteur h₃₀ des échangeurs thermiques 30₁-30₄ est toujours sensiblement inférieure à la hauteur h₂₂ du module de refroidissement 22.

Pour compenser la hauteur relativement faible des échangeurs thermiques 30₁-30₄, ceux-ci peuvent être relativement nombreux, notamment jusqu'à quatre ou cinq échangeurs thermiques 30₁-30₄, voire jusqu'à sept échangeurs thermiques. En effet, pour obtenir des performances comparables aux modules de refroidissement classiques, on peut dédoubler les échangeurs thermiques en les disposant en série deux à deux sur le circuit de fluide qui les traverse. En d'autres termes, un échangeur thermique d'un module de refroidissement classique peut correspondre à deux échangeurs thermiques ou plus dans le module de refroidissement 22, ceux-ci étant traversés par un même fluide. Dans ce cas notamment, il est intéressant que les échangeurs thermiques soient disposés les uns derrière les autres dans le conduit formé par le boîtier 24. L'ordre des échangeurs thermiques peut être déterminé en fonction d'une température du fluide qui les traverse ou d'une distance de l'échangeur thermique considéré à une source chaude, sur le circuit de fluide qui le traverse. Ainsi, les échangeurs thermiques traversés par un fluide plus chaud sont disposés plus loin de l'extrémité 24a du boîtier 24 destiné à être disposée juste derrière la baie de refroidissement 18 que les échangeurs thermiques traversés par un fluide plus froid.

La disposition des échangeurs thermiques 30₁-30₄ les uns derrière les autres dans la direction axiale X du module de refroidissement 22 permet également de limiter l'encombrement du module de refroidissement 22 selon ses deux autres dimensions latérale et verticale. Ainsi, de préférence, la profondeur p₂₂ du module de refroidissement 22 est comprise entre 12 mm et 140 mm. En outre, la largeur L₃₀ des échangeurs thermiques 30₁-30₄ ou de chaque échangeur thermique 30₁-30₄ peut être comprise entre 12 mm et 140 mm.

Par ailleurs, du fait de la forme des échangeurs thermiques 30₁-30₄, une turbomachine tangentielle 28 est préférée. En effet, un ventilateur à hélice ne permettrait pas d'obtenir un flux d'air sensiblement uniforme en contact avec les échangeurs thermiques 30₁-30₄, notamment sur sensiblement toute la longueur de ces échangeurs thermiques 30₁-30₄, longueur mesurée selon la direction latérale Y.

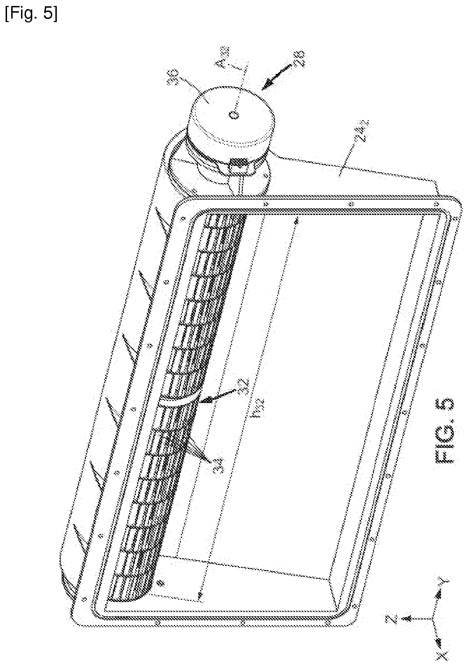

Ici, la turbomachine tangentielle 28 comprend une turbine 32 (ou hélice tangentielle). La turbine 32 a une forme sensiblement cylindrique, comme cela est plus particulièrement visible sur la figure 5. La turbine 32 comporte plusieurs étages de pales 34 (ou aubes), en l'espèce seize étages de pales 34. Bien entendu ce nombre d'étages de pales 34 n'est pas limitatif et la turbine 32 peut comporter, plus généralement, au moins un étage de pales 34.

Chaque étage de pales 34 comporte un même nombre de pales 34, équiréparties angulairement autour de l'axe de rotation A₃₂ de la turbine 32. Avantageusement, les étages de pales 34 sont décalés angulairement de manière que les pales 34 ne soient pas alignées, de préférence de sorte qu'aucune pale 34 ne soit alignée avec une autre pale 34 d'un autre étage de pales 34, selon la direction latérale Y du module de refroidissement 22. On évite ainsi que les pales 34 de la turbine 32 ne génèrent un bruit conséquent, notamment du fait que toutes les pales 32 travailleraient en synchronisation. En décalant les pales 34, on s'assure au contraire que les pales 34 travaillent par groupes séparés, ce qui permet de réduire le bruit généré. On obtient ainsi une turbomachine tangentielle 28 dont les nuisances sonores peuvent être limitées. Ceci est particulièrement important dans le cas d'un module de refroidissement 22 pour véhicule automobile à moteur électrique, puisqu'un moteur électrique est notoirement moins bruyant qu'un moteur thermique. En outre, le module de refroidissement 22 est destiné à être mis en œuvre également alors que le moteur électrique est à l'arrêt, notamment lorsque les batteries sont rechargées. Le bruit de la turbomachine tangentielle 28 pourrait alors être considéré comme gênant par les utilisateurs.

Les pales 34 de chaque étage peuvent notamment être décalées de la moitié du pas entre les pales 34, par rapport à chacun des deux étages voisins. Ainsi, une première moitié des étages de pales 34 ont des pales 34 qui sont alignées entre elles et qui sont décalées de la moitié du pas angulaire entre les pales 34 avec les pales 34 de l'autre moitié des étages de pales 34. On peut ainsi diviser théoriquement le bruit générer par la turbine 22 en rotation sensiblement par deux, ce qui correspond à une atténuation du bruit émis de l'ordre de 3 dB.

Alternativement, le décalage angulaire des pales 34 entre deux étages voisins de pales 34 correspond à l'épaisseur d'une pale 34.

Alternativement ou au surplus, le pas entre les pales 34 peut être divisé en sensiblement autant de positions intermédiaires qu'il n'y a d'étages de pales 34. Ainsi, on peut décaler de proche en proche les pales 34 des différents étages de pales 34, dans une même direction angulaire, le long d'une direction longitudinale de la turbine 32. Les pales 34 des différents étages s'étendent alors sensiblement selon une hélice le long des différents étages de pales 34. Dans ce cas particulier, toutes les pales 34 de tous les étages de pales 34 sont décalées par rapport à toutes les pales 34 de tous les autres étages de pales 34. Ceci permet de diminuer encore le bruit généré par la turbine 32 en rotation.

Bien entendu de nombreuses autres configurations sont accessibles à l'homme de l'art, qui permettent que toutes les pales 34 de tous les étages de pales 34 soient décalées par rapport à toutes les autres pales 34 de tous les autres étages de pales 34. Notamment, à partir de la configuration précédente où les pales 34 des différents étages 34 s'étendent à la manière d'une hélice, on peut intervertir les différents étages, sans en modifier l'orientation autour de l'axe longitudinal de la turbine 32.

La turbomachine 28 comporte également un moteur 36 (ou motoréducteur) adapté à entrainer en rotation la turbine 32 autour son axe de rotation A₃₂. Avantageusement, l'axe de rotation A₃₂ de la turbine 32, qui correspond à la direction de la hauteur de la turbine 32, est orientée sensiblement parallèlement à la direction latérale Y des échangeurs thermiques 30₁-30₄. La turbomachine 28 est ainsi adaptée à créer un flux d'air sensiblement constant sur toute la largeur d'un même échangeur thermique 30₁-30₄. Afin d'optimiser le flux d'air créé, la hauteur h₃₂ de la turbine 32 est sensiblement égale à la largeur L₃₀ des échangeurs thermiques 30₁-30₄.

Le moteur 36 est par exemple adapté à entraîner la turbine 32 en rotation, à une vitesse comprise entre 200 tour/min et 14 000 tour/min. Ceci permet notamment de limiter le bruit généré par la turbomachine 28.

Le diamètre D₃₂ de la turbine 32 est par exemple compris entre 35 mm et 200 mm pour limiter. La turbomachine 28 est ainsi compacte.

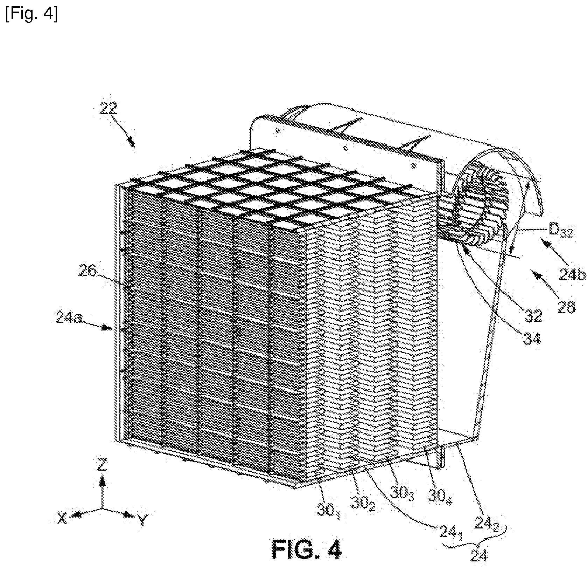

Comme déjà indiqué, la partie arrière 24₂ du boîtier 24 forme la volute de la turbomachine 28, comme cela est plus particulièrement visible sur les figures 4 et 5. En outre, la section du conduit formé dans le boîtier 24 est nettement supérieure au niveau de l'extrémité 24a qu'à son extrémité 24b opposée. On permet ainsi à la turbomachine 28 de créer un flux d'air dans le boîtier 24 qui a une certaine pression, ceci afin de faciliter la traversée par ledit flux d'air, du conduit à travers le boîtier 24, malgré la présence des échangeurs thermiques 30₁-30₄.

Comme il ressort également des figures, le boîtier 24 comprend une partie de structure 38 et une partie 40 d'isolation acoustique et/ou vibratoire.

La partie de structure 38 supporte la partie d'isolation acoustique 40.

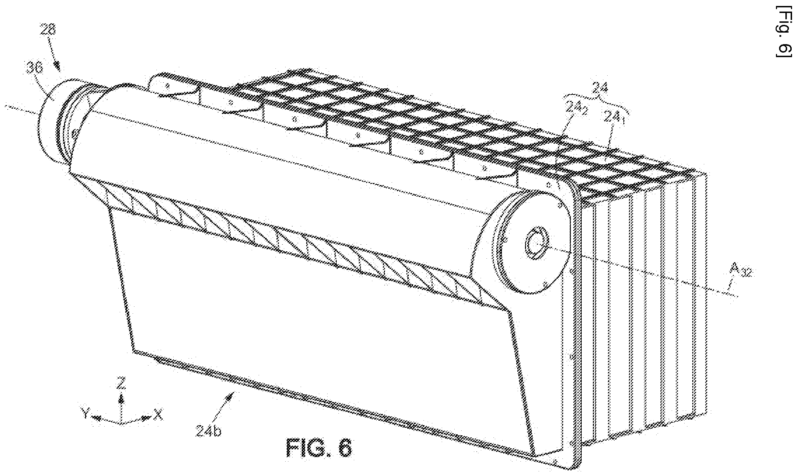

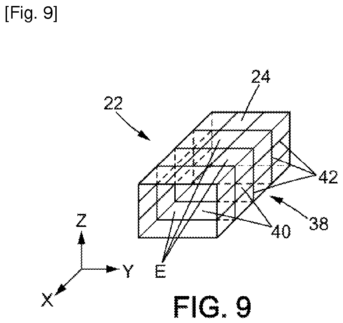

Comme plus particulièrement visible sur les figures 2, 4, 6 et 9, la partie de structure 38 comprend une pluralité d'armatures 42 espacées les unes des autres tandis que la partie d'isolation acoustique 40 recouvre les espaces E entre les armatures 42.

On note que la partie de structure 38 et la partie d'isolation acoustique 40 sont constituées par des matériaux différents.

La partie de structure 38 est constituée d'un matériau rigide, tel que du PP (polypropylène) ou PA 6 (polyamide). Au contraire, la partie d'isolation acoustique 40 est constitué est constitué d'un matériau mou, de type mousse acoustique ou insonorisante, pour absorber les sons et vibrations générées par le module de refroidissement. Il s'agit par exemple d'une mousse acoustique en polyuréthane.

L'invention n'est pas limitée aux exemples de réalisation décrits en regard des figures et d'autres modes de réalisation selon les revendications apparaîtront clairement à l'homme du métier. Notamment, les différents exemples peuvent être combinés, tant qu'ils ne sont pas contradictoires.

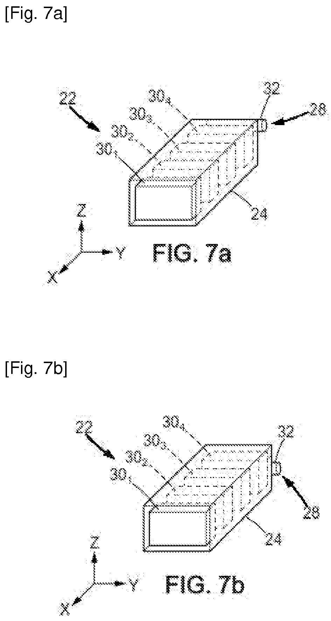

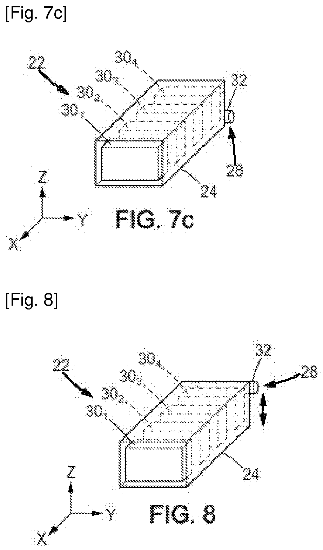

Par exemple, dans l'exemple illustré schématiquement à la figure 7a, la turbomachine 28 est dans une position haute, notamment dans le tiers supérieur du boîtier 24, de manière préférée dans le quart supérieur du boîtier 24. Ceci permet notamment de protéger la turbomachine 28 en cas de submersion et/ou de limiter l'encombrement du module de refroidissement 22 dans sa partie basse. Au contraire, une position basse de la turbomachine 28, illustré à la figure 7c, notamment dans le tiers inférieur du boîtier 24, permet de limiter l'encombrement du module de refroidissement 22 dans sa partie haute. Alternativement, la turbomachine 28 peut être dans une position médiane, illustrée à la figure 7b, notamment dans le tiers médian de la hauteur du boîtier 24, par exemple pour des raisons d'intégration du module de refroidissement 24 dans son environnement.

Par ailleurs, selon l'exemple illustré à la figure 8, la turbomachine 28 et plus particulièrement la turbine 32 de cette turbomachine 28, est déplaçable selon la direction de la hauteur des échangeurs thermiques 30₁-30₄, par rapport à ces échangeurs thermiques 30₁-30₄. Une telle configuration peut par exemple permettre de gérer, ponctuellement dans le temps, le refroidissement d'une portion des échangeurs thermiques 30₁-30₄.

En outre, dans les exemples illustrés, la turbomachine 28 fonctionne en aspiration, c'est-à-dire qu'elle aspire l'air ambiant pour le conduire au contact des différents échangeurs thermiques 30₁-30₄. Alternativement, cependant, la turbomachine 28 fonctionne pas soufflage, soufflant l'air vers les différents échangeurs thermiques 30₁-30₄.

Également, alors que dans l'exemple décrit en regard des figures 2 à 9, la turbomachine est dans le boîtier du module de refroidissement, la turbomachine peut être à l'extérieur de ce boîtier, disposé à une extrémité ou une autre de ce boîtier suivant qu'elle fonctionne en aspiration ou en soufflage.

## Revendications

1. Module de refroidissement (22) pour véhicule automobile (10) à moteur électrique (12), comprenant :
- au moins un échangeur thermique (30₁-30₄),
- au moins une première turbomachine tangentielle (28-1) apte à créer un flux d'air au contact de l'au moins un échangeur thermique (30₁-30₄), et
- un carénage (24) pour loger ledit au moins un échangeur thermique (30₁-30₄) et/ou au moins ladite première turbomachine tangentielle (28-1),
**caractérisé en ce que** le carénage (24) comporte une partie de structure (38) et une partie d'isolation acoustique (40) supportée par la partie de structure (38) et **en ce que** la partie de structure (38) comprend une pluralité d'armatures (42) espacées les unes des autres et la partie d'isolation acoustique (40) couvre au moins partiellement l'espace entre les armatures (42).

2. Module de refroidissement selon la revendication précédente, dans lequel la partie de structure (38) et la partie d'isolation acoustique (40) sont constituées de matériaux différents.

3. Module de refroidissement selon la revendication précédente, dans lequel la partie de structure (38) est constituée d'un matériau rigide tandis que la partie d'isolation acoustique (40) est constituée d'un matériau de type mousse acoustique.

4. Module de refroidissement selon la revendication précédente, dans lequel le matériau rigide est un polymère PP ou PA6.

5. Module de refroidissement selon l'une des revendications précédentes, dans lequel le carénage (24) loge ladite pluralité d'échangeurs thermiques (30₁-30₄) et ladite au moins une première turbomachine tangentielle (28-1).

6. Véhicule automobile à moteur électrique, comprenant une carrosserie (14), un pare-chocs (16) et un module de refroidissement (22) selon l'une quelconque des revendications précédentes, la carrosserie (14) définissant au moins une baie de refroidissement (18) disposée sous le pare-chocs, le module de refroidissement (22) étant disposé en regard de la au moins une baie de refroidissement (18).

## Patentansprüche

1. Kühlmodul (22) für ein Kraftfahrzeug (10) mit Elektromotor (12), umfassend:
- mindestens einen Wärmetauscher (30₁-30₄)
- mindestens eine erste Tangentialflussturbomaschine (28-1), die dazu fähig ist, einen Luftstrom in Kontakt mit dem mindestens einen Wärmetauscher (30₁-30₄) zu erzeugen, und
- eine Verkleidung (24), um den mindestens einen Wärmetauscher (30₁-30₄) und/oder mindestens die erste Tangentialflussturbomaschine (28-1) aufzunehmen,
**dadurch gekennzeichnet, dass** die Verkleidung (24) einen Strukturteil (38) und einen Schallisolierungsteil (40), der von dem Strukturteil (38) getragen wird, beinhaltet und dass der Strukturteil (38) eine Vielzahl von Stäben (42), die voneinander beabstandet sind, umfasst und der Schallisolierungsteil (40) den Raum zwischen den Stäben (42) mindestens teilweise bedeckt.

2. Kühlmodul nach dem vorhergehenden Anspruch, wobei der Strukturteil (38) und der Schallisolierungsteil (40) aus unterschiedlichen Materialien bestehen.

3. Kühlmodul nach dem vorhergehenden Anspruch, wobei der Strukturteil (38) aus einem starren Material besteht, während der Schallisolierungsteil (40) aus einem Material vom Typ Akustikschaum besteht.

4. Kühlmodul nach dem vorhergehenden Anspruch, wobei das starre Material ein PP- oder PA6-Polymer ist.

5. Kühlmodul nach einem der vorhergehenden Ansprüche, wobei die Verkleidung (24) die Vielzahl von Wärmetauschern (30₁-30₄) und die mindestens eine Tangentialflussturbomaschine (28-1) aufnimmt.

6. Kraftfahrzeug mit Elektromotor, umfassend eine Karosserie (14), einen Stoßfänger (16) und ein Kühlmodul (22) nach einem der vorhergehenden Ansprüche, wobei die Karosserie (14) mindestens einen Kühlausschnitt (18) definiert, der unter dem Stoßfänger angeordnet ist, wobei das Kühlmodul (22) gegenüber dem mindestens einen Kühlausschnitt (18) angeordnet ist.

## Claims

1. Cooling module (22) for a motor vehicle (10) with an electric motor (12), comprising:
- at least one heat exchanger (30₁-30₄),
- at least one first tangential-flow turbomachine (28-1) capable of creating an air flow in contact with the at least one heat exchanger (30₁-30₄), and
- a fairing (24) for housing said at least one heat exchanger (30₁-30₄) and/or at least said first tangential-flow turbomachine (28-1),
**characterized in that** the fairing (24) has a structural part (38) and an acoustic insulation part (40) supported by the structural part (38) and **in that** the structural part (38) comprises a plurality of reinforcements (42) that are spaced apart from one another and the acoustic insulation part (40) at least partially covers the space between the reinforcements (42).

2. Cooling module according to the preceding claim, wherein the structural part (38) and the acoustic insulation part (40) are made from different materials.

3. Cooling module according to the preceding claim, wherein the structural part (38) is made from a rigid material whereas the acoustic insulation part (40) is made from an acoustic foam material.

4. Cooling module according to the preceding claim, wherein the rigid material is a PP or PA6 polymer.

5. Cooling module according to one of the preceding claims, wherein the fairing (24) houses said plurality of heat exchangers (30₁-30₄) and said at least one first tangential-flow turbomachine (28-1).

6. Motor vehicle with an electric motor, comprising a body (14), a bumper (16) and a cooling module (22) according to any one of the preceding claims, the body (14) defining at least one cooling opening (18) arranged below the bumper, the cooling module (22) being arranged facing the at least one cooling opening (18).
